# FASCICULE DE BREVET EUROPEEN

(11) **EP 0 852 329 B1**
(45) Date de publication et mention de la délivrance du brevet: **13.11.2002**
(21) Numéro de dépôt: 97403192.4
(22) Date de dépôt: 30.12.1997
(51) Int. Cl.: G01G 19/414

(54) **Appareil de pesage à clavier intégré au plateau**
Wiegevorrichtung mit im Wägetisch integrierter Tastatur
Weighing apparatus with keyboard integrated into the scale

(30) Priorité: 07.01.1997 FR 9700077
(43) Date de publication de la demande: 08.07.1998
(73) Titulaire: SEB S.A., 69130 Ecully (FR)
(72) Inventeur: Anthoine-Milhomme, Didier, 73410 Saint Germain-La-Chambotte (FR); Duborper, Alain, 74150 Sales (FR); Patras, Yves, 74330 Poisy (FR); Sarrazin, Michel, 74150 Massingy (FR)
(74) Mandataire: Keib, Gérard

(56) Documents cités:
- DE-U- 9 107 757
- FR-A- 2 623 623
- FR-A- 2 734 050
- "Combination keypad/scale using strain gauge transducers" IBM TECHNICAL DISCLOSURE BULLETIN, vol. 34, no. 9, février 1992, NEW YORK US, pages 77-78, XP000300606

## Description

La présente invention concerne un appareil de pesage, du type d'un pèse-personne ou d'une balance de ménage.

Un tel appareil comporte traditionnellement un plateau de réception d'une charge à peser et au moins un capteur se déformant sous l'action de la charge appliquée.

Ainsi, le brevet français FR 2 623 623 au nom de la Demanderesse, décrit une balance comportant un capteur unique en forme de barreau métallique fixé à ses extrémités respectivement au plateau et à un socle de la balance.

Le barreau forme ainsi un corps d'épreuve supportant des jauges d'extensométrie reliées à un circuit électronique.

Lors de l'application d'une charge sur le plateau, le barreau métallique est soumis principalement à un effort de flexion, mais également à des moments parasites, notamment de torsion, du fait de l'excentricité du point d'application de la charge sur le plateau.

Le circuit électronique permet de déterminer, à partir des informations transmises par les jauges d'extensométrie sur la déformation du barreau, l'intensité de la force appliquée sur le plateau et la position de son point d'application dans le plan formé par le plateau de réception de charge de l'appareil de pesage.

Lors du calcul du poids, la connaissance de la position de la charge appliquée sur le plateau permet de corriger la mesure de l'intensité de la force appliquée qui est faussée du fait de l'excentricité du point d'application de la force par rapport au centre de symétrie du barreau métallique disposé sous le plateau.

De même, on connaît des appareils de pesage tels que décrits dans la demande de brevet français FR 2 734 050 au nom de la Demanderesse comprenant plusieurs capteurs disposés sous le plateau et supportant ce dernier.

En connaissant la force supportée par chacun de ces capteurs, on en déduit la position du point d'application de la charge sur le plateau et l'intensité de la force appliquée.

Chaque capteur comporte de préférence un barreau formant corps d'épreuve, supportant des jauges d'extensométrie qui émettent des signaux de déformation lorsque le capteur est déformé sous l'effet de l'application d'une charge sur le plateau et adressent ces signaux à un circuit électronique commun.

On souhaite parfois ajouter à l'appareil de pesage traditionnel, outre sa fonction principale de détermination du poids d'une charge posée sur le plateau, des fonctions diverses telles que mémorisation du poids mesuré, affichage du dernier poids mesuré ou de l'heure, réglage d'un temps de minuterie.

De telles fonctions sont commandées dans les appareils traditionnels par l'intermédiaire d'un clavier disposé généralement sur un côté de l'appareil de pesage et séparé du plateau de réception de la charge.

Le clavier comporte plusieurs zones matérialisées et des moyens de détection, disposés sous le clavier, permettent de détecter l'action de l'utilisateur sur une des zones matérialisées du clavier et de commander ainsi la fonction désirée.

Cependant, ces appareils de pesage sont encombrants car ils obligent à prévoir une surface formant clavier adjacente au plateau.

En outre, un système de détection, distinct du système de calcul du poids proprement dit, doit être prévu sous le clavier, ce qui augmente le coût de l'appareil.

On connaît également dans le document IBM TECHNICAL DISCLOSURE BULLETIN, Vol.34, n°9, Février 1992, pages 77-78, «Combination keypad / scale using strain gauge transducers», un dispositif de pesage combinant une balance et un clavier utilisant les mêmes jauges de contrainte pour le calcul du poids d'un article posé sur la balance et le fonctionnement classique d'un clavier de supermarché.

Cependant, pour passer du mode clavier au mode balance, une touche spécifique est prévue et doit être actionnée par l'utilisateur pour le passage en mode pesage avant de poser un article sur le plateau de la balance.

Cette opération est contraignante pour l'utilisateur et le but de la présente invention est de supprimer cet inconvénient et de proposer un appareil de pesage comportant des fonctions accessoires et utilisant au mieux les différents moyens existants traditionnellement pour effectuer la pesée d'une charge.

L'appareil de pesage visé par l'invention comprend un plateau de réception d'une charge à peser, au moins un capteur se déformant sous l'action d'une charge appliquée au plateau, le capteur étant connecté à un circuit électronique adapté à transformer un signal de déformation émis par le capteur en des signaux électriques représentatifs de l'intensité de la charge appliquée et de la position du point d'application de la charge dans le plan du plateau de réception, des moyens de calcul du poids de cette charge appliquée en fonction des signaux électriques, au moins une zone matérialisée en une position prédéterminée du plan du plateau de réception et des moyens électroniques accessoires adaptés à réaliser au moins une fonction autre que le calcul du poids de la charge lorsque le circuit électronique détecte l'application d'une charge en ladite position prédéterminée de la zone matérialisée.

Selon l'invention, cet appareil est caractérisé en ce qu'il comprend des moyens de comparaison adaptés à comparer l'intensité d'une charge appliquée sur le plateau à une intensité de référence et à actionner les moyens de calcul du poids ou les moyens électroniques accessoires en fonction d'un signal de sortie émis par les moyens de comparaison.

Ainsi, le plateau de l'appareil de pesage est directement utilisé comme clavier servant à commander au moins une fonction autre que le calcul du poids.

La détection de la commande d'une telle fonction est réalisée par le même circuit électronique que celui qui préexiste pour déterminer la position du point d'application d'une charge sur le plateau.

En fonction de l'intensité de la force appliquée sur le plateau, l'appareil de pesage calcule le poids de la charge ou effectue des fonctions annexes sans que l'utilisateur n'ait à donner d'instructions spécifiques en appliquant une force sur une touche spécifique du plateau.

Selon une version préférée de l'invention, l'appareil de pesage comprend plusieurs zones matérialisées en des positions prédéterminées différentes dans le plan du plateau de réception, les moyens électroniques accessoires étant adaptés à réaliser des fonctions différentes associées respectivement aux positions prédéterminées différentes, telles qu'affichage du dernier poids calculé, mise en route d'une minuterie.....

Plusieurs fonctions peuvent ainsi être commandées à partir du plateau de balance formant clavier.

D'autres particularités et avantages de l'invention apparaîtront encore dans le description ci-après.

Aux dessins annexés, donnés à titre d'exemples non limitatifs:
- la figure 1 est une vue schématique de dessus d'un appareil de pesage selon un premier mode de réalisation;
- la figure 2 est une vue schématique en perspective d'un appareil de pesage selon un second mode de réalisation;
- la figure 3 est une vue de dessus d'un premier exemple de plateau d'un appareil de pesage conforme à l'invention;
- la figure 4 est une vue de dessus d'un second exemple de plateau d'un appareil de pesage conforme à l'invention; et
- la figure 5 est un schéma synoptique du fonctionnement de l'appareil de pesage conforme à l'invention.

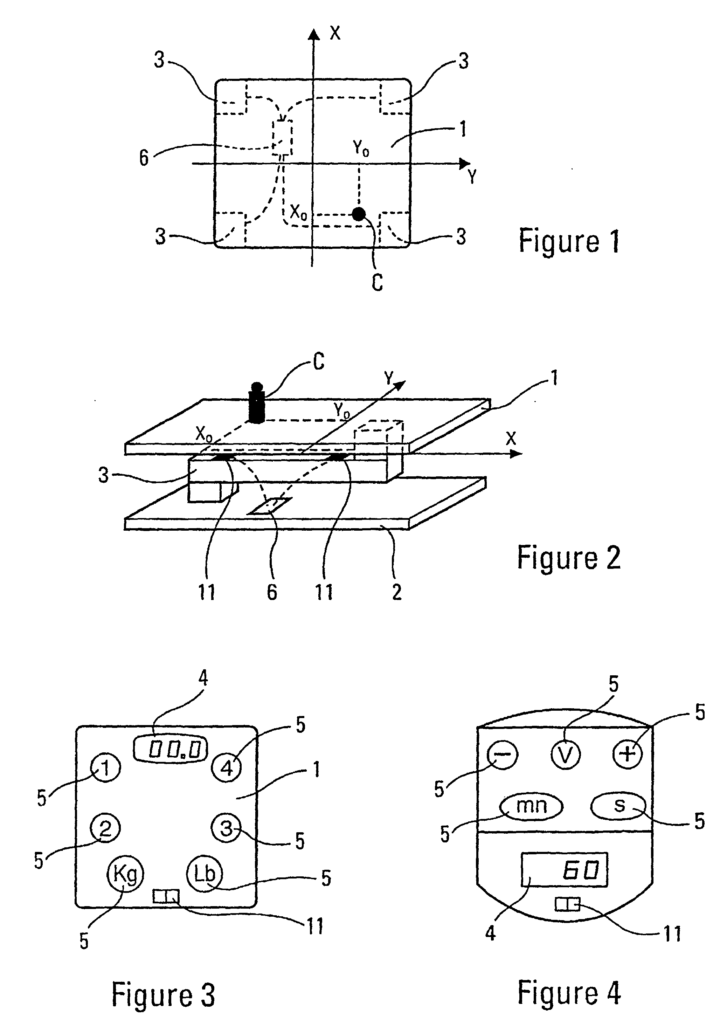

En référence tout d'abord aux figures 1 et 2, un appareil de pesage comprend un plateau de réception 1 d'une charge à peser et au moins un capteur 3 se déformant sous l'action d'une charge C appliquée sur le plateau 1.

De manière générale, l'appareil de pesage comprend un plateau 1 soutenu par un ou plusieurs capteurs de poids 3 permettant de mesurer les forces et les moments engendrés par la charge C appliquée au plateau 1.

A la figure 1, l'appareil de pesage comprend quatre capteurs 3 formant des pieds supportant le plateau rectangulaire 1 à ses quatre coins.

Un tel appareil est décrit dans la demande de brevet FR 2 734 050.

Les capteurs 3 sont connectés à un circuit électronique commun 6 adapté à transformer le signal de déformation émis par les jauges d'extensométrie de chaque capteur 3 en des signaux électriques représentatifs de l'intensité I de la charge appliquée C et de la position X°, Y° du point d'application de cette charge C dans le plan du plateau de réception 1, défini par les axes X, Y sur la figure 1.

Des moyens électroniques de calcul du poids permettent ensuite de déterminer la valeur numérique du poids de la charge C en fonction des signaux électriques.

A la figure 2, l'appareil de pesage comporte un capteur unique 3 constitué d'un barreau métallique fixé à une extrémité au plateau 1 et à son autre extrémité à un socle 2 de l'appareil de pesage.

Des jauges d'extensométrie 11 sont disposées sur le barreau 3 et sont connectées au circuit électronique 6.

Un tel appareil de pesage est décrit dans la demande de brevet FR 2 623 623.

De même, le signal de déformation émis par les jauges d'extensométrie 11, lors de la déformation du barreau 3, est adressé au circuit électronique 6 qui émet à son tour des signaux électriques représentatifs de l'intensité I de la charge appliquée C et de la position X°, Y° de son point d'application sur le plateau 1.

Comme illustré aux figures 3 et 4, l'appareil de pesage comprend plusieurs zones matérialisées 5 en des positions prédéterminées du plan du plateau 1 de réception des charges C. Il comprend également de manière connue un écran 4 d'affichage, par exemple à cristaux liquides.

Lorsque le circuit électronique 6 détecte l'application d'une charge C en une position prédéterminée d'une zone matérialisée 5, des moyens électroniques accessoires 8 sont adaptés à réaliser au moins une fonction 9 autre que le calcul du poids de la chargé C.

Ces fonctions 9 peuvent être choisies parmi une mise en mémoire de données, un affichage de données mémorisées, un réglage d'une horloge électronique, un choix d'unité d'affichage de données.

Ainsi, sur la figure 3, illustrant le plateau 1 d'un pèse-personne, deux zones matérialisées 5 permettent de commander un choix d'unité d'affichage du poids en kilogrammes (kg) ou en livres (1b).

Quatre autres zones matérialisées 5, numérotées de 1 à 4, permettent de sélectionner chacune une mémoire distincte pour mémoriser le poids d'individus différents par exemple.

A la figure 4, une balance de ménage, servant à peser des aliments, comprend également plusieurs zones matérialisées sur le plateau 1 permettant de gérer une minuterie.

Deux zones permettent de sélectionner l'unité de temps en minute (mn) ou en seconde (s). Deux autres zones 5 permettent respectivement d'augmenter (+) ou de diminuer (-) le temps affiché sur l'écran 4 et une dernière zone matérialisée (V) permet de valider la durée affichée et de déclencher la minuterie.

Lorsqu'une force est appliquée sur l'une des zones matérialisées 5, typiquement par l'action d'un doigt de l'utilisateur sur cette zone 5, le ou les capteurs 3 se déforment et adressent des signaux de déformation au circuit électronique 6 qui en déduit l'intensité I de la force appliquée et la position X°, Y° du point d'appui.

En fonction de la position ainsi détectée, les moyens électroniques accessoires 8 réalisent une des fonctions 9, associée à la zone matérialisée 5.

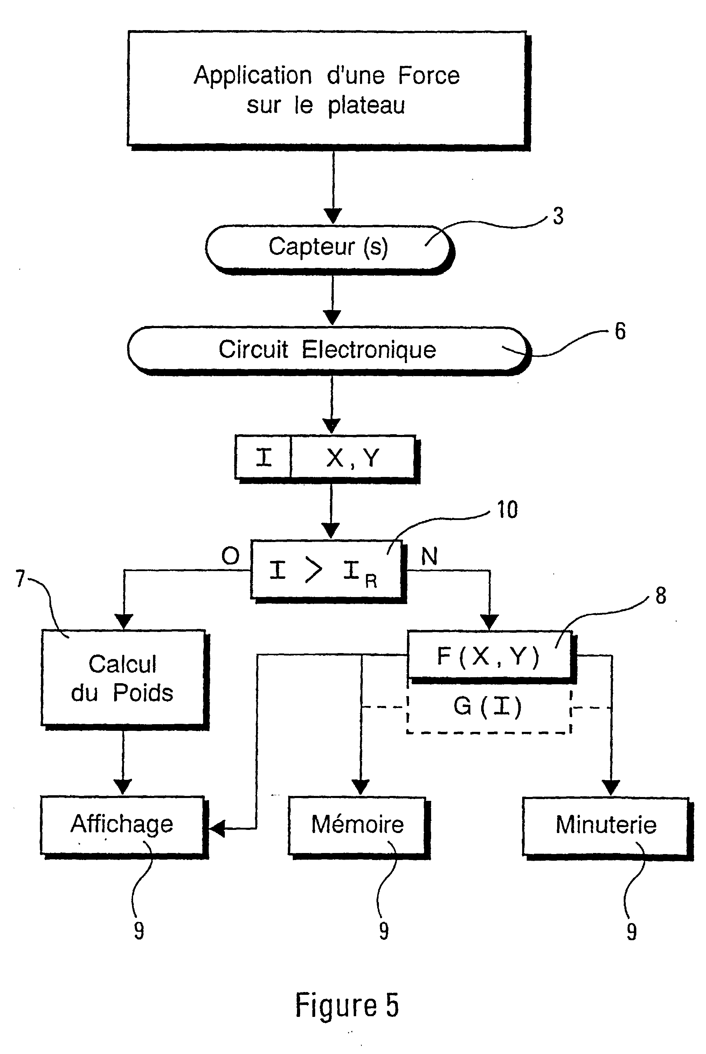

Comme illustré à la figure 5, des moyens de comparaison 10 sont adaptés à comparer l'intensité I d'une charge C appliquée sur le plateau 1 avec une intensité de référence I_{R} et à actionner les moyens de calcul du poids 7 ou les moyens électroniques accessoires 8 en fonction d'un signal de sortie émis par les moyens de comparaison 10. L'appareil de pesage est ainsi commuté soit en mode pesée, soit en mode clavier.

De préférence, les moyens électriques accessoires 8 sont actionnés lorsque l'intensité I de la charge appliquée C est inférieure à l'intensité de référence I_{R}.

Ainsi, pour un pèse-personne par exemple, l'intensité de référence I_{R} peut correspondre à une charge d'un poids de 5 kg. Lorsque l'utilisateur se place sur le plateau de réception 1 de l'appareil de pesage, l'intensité mesurée I est supérieure à l'intensité de référence I_{R} et les moyens de comparaison émettent un signal O destiné à commander les moyens de calcul du poids 7 et son affichage sur l'écran 4.

Lorsque l'utilisateur appuie sur l'une des zones matérialisées 5 pour sélectionner une fonction 9 autre que celle du calcul du poids 7, l'intensité I de la force appliquée est inférieure à l'intensité de référence I_{R} et les moyens de comparaison émettent un signal contraire N destiné à commander le circuit électronique accessoire 8 afin de réaliser la fonction sélectionnée 9.

En parallèle à ces moyens de comparaison 10, ou en substitution de ceux-ci, un bouton de commutation 11 peut être prévu sur l'appareil de pesage pour commuter l'appareil de pesage en mode pesée ou en mode clavier, indépendamment de l'intensité I de la force appliquée. Le bouton de commutation 11 est adapté à sélectionner les moyens de calcul du poids 7 ou les moyens électroniques accessoires 8.

De préférence, chaque fonction 9 réalisée par les moyens électroniques accessoires 8 est modifiée suivant l'intensité I de la charge appliquée C sur la position prédéterminée associée à cette fonction 9.

Ainsi, les moyens électroniques accessoires 9 possèdent à la fois des moyens électroniques F (X, Y) de détermination d'une fonction 9 suivant la position X, Y de la force appliquée à une zone matérialisée 5 et des moyens électroniques G (I) qui permettent de modifier la fonction 9 suivant l'intensité I de la force appliquée.

L'intensité I de la force appliquée peut permettre de gérer la saisie d'informations avec un effet proportionnel par exemple.

Ainsi, à titre d'exemple, le niveau sonore d'un signal émis par l'appareil de pesage peut être proportionnel à l'intensité I de la charge appliquée sur une zone matérialisée 5 dont la position Y, Y sur le plateau 1 correspond à une fonction 9 de mise en route d'une minuterie avec émission dudit signal sonore une fois le temps de consigne écoulé.

De même, lors du réglage d'un temps de minuterie, la vitesse de défilement des chiffres sur l'écran 4 de l'appareil peut être proportionnelle à l'intensité I de la force appliquée.

L'intensité I de la force peut également permettre d'associer des fonctions multiples à une même zone matérialisée 5 du plateau de réception 1 de la charge.

Ainsi, un léger appui, d'intensité faible, sur une zone matérialisée peut correspondre à un temps de consigne exprimé en secondes lors du réglage d'une minuterie, alors qu'un appui fort, d'intensité élevée, correspond à un temps de consigne exprimé en minutes.

Bien entendu, de nombreuses modifications peuvent être apportées aux exemples décrits ci-dessus sans sortir du cadre de l'invention.

Bien que les exemples décrivent des appareils de pesage à un ou quatre capteurs de poids, l'invention s'applique de manière générale à tout appareil ayant un plateau soutenu par un ou plusieurs capteurs de poids.

## Revendications

1. Appareil de pesage comprenant un plateau de réception (1) d'une charge à peser, au moins un capteur (3) se déformant sous l'action d'une charge (C) appliquée au plateau (1), ledit capteur (3) étant connecté à un circuit électronique (6) adapté à transformer un signal de déformation émis par le capteur (3) en des signaux électriques représentatifs de l'intensité (I) de la charge appliquée et de la position (X, Y) du point d'application de ladite charge (C) dans le plan du plateau de réception (1), des moyens de calcul (7) du poids de ladite charge appliquée (C) en fonction desdits signaux électriques, au moins une zone matérialisée (5) en une position (X°, Y°) prédéterminée du plan du plateau de réception (1) et des moyens électroniques accessoires (8) adaptés à réaliser au moins une fonction (9) autre que le calcul du poids de la charge lorsque le circuit électronique (6) détecte l'application d'une charge (C) en ladite position prédéterminée (X°, Y°) de la zone matérialisée (5), **caractérisé en ce qu'**il comprend des moyens de comparaison (10) adaptés à comparer l'intensité (I) d'une charge (C) appliquée sur le plateau (1) à une intensité de référence (I_{R}) et à actionner lesdits moyens de calcul du poids (7) ou lesdits moyens électroniques accessoires (8) en fonction d'un signal de sortie (O, N) émis par les moyens de comparaison (10).

2. Appareil de pesage conforme à la revendication 1, **caractérisé en ce qu'**il comprend plusieurs zones matérialisées (5) en des positions prédéterminées différentes (X°, Y°) dans le plan du plateau de réception (1), les moyens électroniques accessoires (8) étant adaptés à réaliser des fonctions différentes (9) associées respectivement aux positions prédéterminées différentes.

3. Appareil de pesage conforme à l'une des revendications 1 ou 2, **caractérisé en ce que** lesdites fonctions (9) sont choisies parmi une mise en mémoire de données, un affichage de données mémorisées, un réglage d'une horloge électronique, un choix d'unité d'affichage de données.

4. Appareil de pesage conforme à l'une des revendications 1 à 3, **caractérisé en ce que** lesdits moyens électroniques accessoires (8) sont actionnés lorsque l'intensité (I) de la charge appliquée (C) est inférieure à ladite intensité de référence (I_{R}).

5. Appareil de pesage conforme à l'une des revendications 1 à 4, **caractérisé en ce qu'**il comprend un bouton de commutation (11) adapté à sélectionner lesdits moyens de calcul du poids (7) ou lesdits moyens électroniques accessoires (8).

6. Appareil de pesage conforme à l'une des revendications 1 à 5, **caractérisé en ce qu'**en outre chaque fonction (9) réalisée par les moyens électroniques accessoires (8) est modifiée suivant l'intensité (I) de la charge appliquée (C) sur ladite position prédéterminée associée à ladite fonction.

7. Appareil de pesage conforme à l'une des revendications 1 à 6, **caractérisé en ce qu'**il comprend un capteur unique constitué d'un barreau métallique (3) fixé à une extrémité au plateau (1) et à l'autre extrémité à un socle (2) dudit appareil de pesage, des jauges d'extensométrie (11) étant disposées sur le barreau (3) et connectées au circuit électronique (6).

8. Appareil de pesage conforme à l'une des revendications 1 à 7, **caractérisé en ce qu'**il comprend un ou plusieurs capteurs (3) soutenant le plateau (1) et adaptés à mesurer des forces et des moments engendrés par une charge (C) appliquée au plateau (1).

9. Appareil de pesage conforme à l'une des revendications 1 à 8, **caractérisé en ce qu'**il comprend au moins trois capteurs (3) supportant ledit plateau (1).

## Patentansprüche

1. Wägevorrichtung, mit einer Platte (1) zur Aufnahme einer zu wiegenden Last, zumindest einem sich unter Einwirkung einer auf die Platte (1) einwirkenden Last (C) verformenden Messaufnehmer (3), wobei der Messwertaufnehmer (3) an eine elektronische Schaltung (6) angeschlossen ist, die ausgestaltet ist, um ein durch den Messwertaufnehmer (3) ausgegebenes Verformungssignal in elektrische Signale umzuwandeln, die die Intensität (I) der einwirkenden Last und die Position (X, Y) des Einwirkungspunktes der Last (C) in der Ebene der Platte (1) zur Aufnahme wiedergeben, Mitteln (7) zur Berechnung des Gewichts der einwirkenden Last (C) als Funktion der elektrischen Signale, zumindest einer an einer vorbestimmten Position (X°, Y°) in der Ebene der Platte (1) zur Aufnahme verwirklichten Zone, und mit elektronischen Zusatzmitteln (8), die ausgestaltet sind, um zumindest eine von der Berechnung der Gewichts der Last unterschiedliche Funktion (9) zu verwirklichen, wenn die elektronische Schaltung (6) das Einwirken einer Last (C) an der vorbestimmten Position (X°, Y°) der verwirklichten Zone (5) erfasst,
**gekennzeichnet durch**
Vergleichsmittel (10), die ausgestaltet sind, um die Intensität (I) einer auf die Platte (1) einwirkenden Last (C) mit einer Bezugsintensität (I_{R}) zu vergleichen und um die Mittel (7) zur Berechnung des Gewichts oder die elektronischen Zusatzmittel (8) abhängig von einem Ausgangssignal (O, N) zu betätigen, welches von den Vergleichsmitteln (10) abgegeben wird.

2. Wägevorrichtung nach Anspruch 1,
**dadurch gekennzeichnet, dass**
sie mehrere verwirklichte Zonen (5) an unterschiedlichen vorbestimmten Positionen (X°, Y°) in der Ebene der Platte (1) zur Aufnahme hat, wobei die elektronischen Zusatzmittel (8) ausgestaltet sind, um unterschiedliche Funktionen (9) zu verwirklichen, die jeweiligen unterschiedlichen vorbestimmten Positionen zugeordnet sind.

3. Wägevorrichtung nach einem der Ansprüche 1 oder 2,
**dadurch gekennzeichnet, dass**
die Funktionen (9) ausgewählt sind unter einem Speichern der Daten, einer Anzeige gespeicherter Daten, einer Einstellung eines elektronischen Taktgebers, einer Wahl der Anzeigeeinheit der Daten.

4. Wägevorrichtung nach einem der Ansprüche 1 bis 3,
**dadurch gekennzeichnet, dass**
die elektronischen Zusatzmittel (8) betätigt werden, wenn die Intensität (I) der einwirkenden Last (C) kleiner als die Bezugsintensität (I_{R}) ist.

5. Wägevorrichtung nach einem der Ansprüche 1 bis 4,
**dadurch gekennzeichnet, dass**
sie eine Umschalttaste (11) aufweist, die ausgestaltet ist, um die Mittel (7) zur Berechnung des Gewichts oder die elektronischen Zusatzmittel (8) auszuwählen.

6. Wägevorrichtung nach einem der Ansprüche 1 bis 5,
**dadurch gekennzeichnet, dass**
unter anderem jede durch die elektronischen Zusatzmittel (8) verwirklichte Funktion (9) gemäß der Intensität (I) der einwirkenden Last (C) in der der Funktion zugeordneten vorbestimmten Position modifiziert wird.

7. Wägevorrichtung nach einem der Ansprüche 1 bis 6,
**dadurch gekennzeichnet, dass**
sie einen einzigen Messwertaufnehmer aufweist, welcher gebildet ist durch einen metallischen Stab (3), der an einem Ende an der Platte (1) befestigt ist und am anderen Ende an einem Sockel (2) der Wägevorrichtung befestigt ist, wobei Dehnungsmessstreifen (11) auf dem Stab (3) angeordnet sind und an die elektronische Schaltung (6) angeschlossen sind.

8. Wägevorrichtung nach einem der Ansprüche 1 bis 7,
**dadurch gekennzeichnet, dass**
sie einen oder mehrere Messwertaufnehmer (3) aufweist, die die Platte (1) stützen und ausgestaltet sind, um die über eine Last (C) auf die Platte (1) einwirkenden entwickelten Kräfte und Momente zu messen.

9. Wägevorrichtung nach einem der Ansprüche 1 bis 8,
**dadurch gekennzeichnet, dass**
sie zumindest drei Messwertaufnehmer (3) aufweist, die die Platte (1) stützen.

## Claims

1. A weighing machine comprising a tray (1) for holding a load for weighing, at least one pick-up (3) deformable under the action of a load (C) applied to the tray (1), the pick-up (3) being connected to an electronic circuit (6) adapted to convert a deformation signal transmitted by the pick-up (3) into electric signals representing the intensity (A) of the applied load and the position (X, Y) of the point of application of the load (C) in the plane of the tray (1), means (7) for calculating the weight of the applied load (C) in dependence on the said electric signals, at least one zone (5) at a set position (X-, Y-) in the plane of the tray (1) and accessory electronic means (8) adapted to perform at least one function (9) other than calculating the weight of the load when the electronic circuit (6) detects application of a load (C) at the set position (X-, Y-) of the zone (5)', the machine being **characterised in that** it comprises comparison means (10) adapted to compare the intensity (I) of a load (C) applied to the tray (1) with a reference intensity (I_{R}) and to actuate the weight calculating means (7) or the accessory electronic means (8) in dependence on an output signal (O, N) emitted by the comparison means (10).

2. A weighing machine according to claim 1, **characterised in that** it comprises a number of zones (5) at different set positions (X-, Y-) in the plane of the tray (1), the accessory electronic means (8) being adapted to perform different functions (9) associated with respective different set positions.

3. A weighing machine according to claim 1 or 2, **characterised in that** said functions (9) are chosen from among data storage, display of the stored data, adjustment of an electronic clock, and choice of a data display unit.

4. A weighing machine according to any of claims 1 to 3, **characterised in that** the accessory electronic means (8) are actuated when the intensity (I) of the applied load (C) is below the reference intensity (I_{R}).

5. A weighing machine according to any of claims 1 to 4, **characterised in that** it comprises a switch button (11) adapted to select the said weight calculating means (7) or the said accessory electronic means (8).

6. A weighing machine according to any of claims 1 to 5, **characterised in that** in addition, each function (9) performed by the accessory electronic means (8) is modified in dependence on the intensity (I) of the load (C) applied at the set position associated with the said function.

7. A weighing machine according to any of claims 1 to 6, **characterised in that** it comprises a single pick-up comprising a metal bar (3) fixed at one end to the tray (1) and at the other end to a base (2) of the weighing machine, strain gauges (11) being disposed on the bar (3) and connected to the electronic circuit (6).

8. A weighing machine according to any of claims 1 to 7, **characterised in that** it comprises one or more pick-ups (3) supporting the tray (1) and adapted to measure forces and moments generated by a load (C) applied to the tray (1).

9. A weighing machine according to any of claims 1 to 8, **characterised in that** it comprises at least three pick-ups (3) supporting the tray (1).
